# EUROPÄISCHE PATENTSCHRIFT

(11) **EP 0 806 133 B1**
(45) Veröffentlichungstag und Bekanntmachung des Hinweises auf die Patenterteilung: **16.08.2001**
(21) Anmeldenummer: 97105893.8
(22) Anmeldetag: 10.04.1997
(51) Int. Cl.: A01D 78/10

(54) **Vorrichtung zum Schwenken der Tragarme von Vielkreisel-heumaschinen**
Device for swinging the rake members of a hay maker
Dispositif pour pivoter les roues râteleuses d'une machine de fenaison

(30) Priorität: 07.05.1996 DE 19618263
(43) Veröffentlichungstag der Anmeldung: 12.11.1997
(73) Patentinhaber: CLAAS SAULGAU GMBH, D-88340 Saulgau (DE)
(72) Erfinder: Deni, Franz, 88348 Saulgau-Bogenweiler (DE)

(56) Entgegenhaltungen:
- EP-A- 0 165 638
- EP-A- 0 391 093
- EP-A- 0 628 240
- EP-A- 0 753 247
- DE-A- 4 128 585
- DE-U- 8 807 054
- DE-U- 9 010 179

## Beschreibung

Die Erfindung betrifft eine Vorrichtung zum Schwenken der Arbeitskreisel tragenden Arme und zur Höhenverstellung von Vielkreisel-Heumaschinen nach dem Oberbegriff des Anspruchs 1.

Heumaschinen dieser Art mit acht oder mehr Arbeitskreiseln sind bekannt und u. a. in der nicht vorveröffentlichten Patentanmeldung 195 41 355.5 beschrieben.

Beim Übergang von der Arbeitsstellung in die Transportstellung und umgekehrt, aber auch bei der Arbeit auf dem Feld, müssen viele Schwenkbewegungen der einzelnen Arme und sonstigen beweglichen Baugruppen einer solcher Maschine durchgeführt werden. Zum Antrieb sind jeweils hydraulische Hubzylinder vorgesehen. Wünschenswert ist deren Steuerung ausschließlich vom Schlepper aus. Dabei bergen die Schwenkvorgänge bei Fehlsteuerung erhebliche Gefahren in sich, nämlich die Gefahr von Beschädigungen der Maschine und Gefahren für Leib und Leben der bedienenden Person. Dies sei kurz wie folgt erläutert: Um die Seitenarme nach vorn schwenken zu können, müssen die Zinkenkreisel zuvor vom Boden abgehoben sein. Außerdem müssen die ersten seitlichen Zinkenkreisel bezüglich der benachbarten, am Mittelrahmen gelagerten Zinkenkreisel außer Eingriff sein, was durch Hochschwenken der inneren Arme erreicht werden kann. Nun sind aber die mehrgliedrigen Seitenarme in ihrer Gesamtheit so lang, daß Sie beim Schwenken nach vorn am Schlepper anstoßen würden. Also ist es ferner erforderlich, vor dem Schwenken die äußeren Glieder der Seitenarme hoch- und ggf. nach innen zu schwenken, um so die Seitenarme für den Transport auf das erforderliche Maß zu verkürzen. Umgekehrt dürfen vor dem Zurückschwenken in die Arbeitsstellung die äußeren Glieder der Seitenarme nicht nach außen und unten schwenken, denn die daran gelagerten Zinkenkreisel würden sonst von oben auf den Schlepper oder in der Nähe stehende Personen aufschlagen.

Der Erfindung liegt die Aufgabe zugrunde, mit geringem Aufwand eine einfach und unfallsicher zu bedienende Vorrichtung zu schaffen, um die einzelne Arme und Baugruppen einer Vielkreisel-Heumaschine im Verlauf ihrer verschiedenen Benutzungsphasen zu verstellen.

Ausgehend von einer Vorrichtung der einleitend bezeichneten Art wird diese Aufgabe erfindungsgemäß durch die kennzeichnenden Merkmale des Anspruchs 1 gelöst. Das zusätzliche, an der Heumaschine angebrachte und mittels beispielsweise eines Zugseils vom Schlepper aus betätigbare Ventil zwingt den Schlepperfahrer, die horizontale Schwenkbewegung von der Arbeitsstellung in die Transportstellung nur mit Blick auf die Maschine vorzunehmen. Er wird also beobachten, ob alle Voraussetzungen für die Ausführung dieser Bewegung vorliegen, d. h. alle notwendigen vorhergehenden Bewegungen abgeschlossen sind. Sollte dies nicht der Fall sein, so wird er angesichts einer entstehenden Gefahrensituation durch Loslassen des Seils die Bewegung augenblicklich stoppen.

Sollen die Seitenarme aus der Transportstellung in die Arbeitsstellung geschwenkt werden, so wird eine Kollision der äußeren Zinkenkreisel mit dem Schlepper und dem Fahrer dadurch sicher ausgeschlossen, daß ein Sperrventil in einer der Hydraulikleitungen angeordnet ist, die zu den das Hochschwenken oder Einklappen der äußeren Arme bewirkenden Zylindern führen, welches Sperrventil derart in Abhängigkeit von der horizontalen Schwenkbewegung der inneren Arme selbsttätig steuerbar ist, das es in der Arbeitsstellung geöffnet und in der Transportstellung, bzw. auch nach dem Verlassen der Transportstellung bis kurz vor Erreichen der Arbeitsstellung, geschlossen ist. Beispielsweise kann auch hier ein Kugelventil vorgesehen sein, dessen Bedienungshebel einerseits von einer Feder in die Sperrstellung und andererseits über ein Seil oder über eine Koppelstange von einem der inneren Arme beim Einschwenken in die Querstellung in die Öffnungsstellung gezogen wird.

Die einzelnen Antriebsaufgaben bei einer solchen Heumaschine sind unterschiedlich, je nach dem, ob einfachwirkende Zylinder eingesetzt werden können oder doppeltwirkende eingesetzt werden müssen oder ob eine Schwimmstellung erforderlich ist oder nicht. Vorzugsweise wird vorgeschlagen, daß zum Hochschwenken oder Einklappen der äußeren Arme und zum horizontalen Schwenken der inneren Arme doppeltwirkende Zylinder in Parallelschaltung mit den doppeltwirkenden steuerbaren Hydraulikanschlüssen des Schleppers verbunden sind und daß zum Hochschwenken der inneren Arme sowie zur Höhenverstellung der Transporträder einfachwirkende Zylinder in Parallelschaltung mit den einfachwirkenden steuerbaren Hydraulikanschlüssen des Schleppers verbunden sind. Dabei ist es von Vorteil, wenn das doppeltwirkende und das einfachwirkende Hydrauliksystem an der Heumaschine über ein Rückschlagventil miteinander verbunden sind, derart, daß die beim horizontalen Einschwenken in die Transportstellung unter Druck stehende Leitung des doppeltwirkenden Systems zu dem einfachwirkenden System hin offen ist. Damit wird nicht nur eine Bedienungsvereinfachung erreicht, weil nämlich nach Beendigung der Arbeit auf dem Feld das Einschwenken in die Transportstellung nur durch die Betätigung des Stellhebels des doppeltwirkenden Systems eingeleitet wird und dabei alle zunächst notwendigen Antriebsvorgänge ablaufen. Andererseits können aber die einfachwirkenden Zylinder durch Betätigen des anderen Stellhebels am Schlepper auch unabhängig von den doppeltwirkenden Zylindern betätigt, d. h. angehoben und abgesenkt werden.

Dadurch ist vorteilhafterweise eine einfache Einhandbedienung beim Wenden der Maschine am Ende des Feldes möglich. Zum Wenden sollten alle Zinkenkreisel wenigstens soweit angehoben werden, daß sie keine Bodenberührung mehr haben. Das wird ausschließlich mit den einfachwirkenden Zylindern erreicht. Die Zinkenkreisel am Mittelrahmen werden durch Anheben desselben bezüglich der Transporträder angehoben und die übrigen Zinkenkreisel durch Hochschwenken der inneren Arme, soweit erforderlich. Damit die Hubbewegungen an beiden Maschinenseiten stets gleich groß sind, wird vorgeschlagen, daß im einfachwirkenden Hydrauliksystem ein Mengenteiler vorgesehen ist, der den einfachwirkenden Zylindern auf der linken und rechten Seite der Heumaschine gleiche Ölmengen zuteilt. Außerdem ist es vorteilhaft, den Zylindern zur Höhenverstellung des Mittelrahmens Rückschlagdrosseln vorzuschalten, derart, daß bei Freigabe des Rücklaufs die inneren Arme schneller Absinken als der Mittelrahmen bezüglich der Transporträder. Das ist von Bedeutung, wenn nach dem Einschwenken in die Transportstellung die inneren Arme auf Tragstützen am Mittelrahmen aufgesattelt werden sollen.

Entlang eines Grabens (Grabenräumen) oder einer Grundstücksgrenze, soll das Heu an der betreffenden Seite nicht über die Breite der Maschine hinaus geschleudert werden. Um dies zu erreichen, ist es bekannt, einen Seitenarm über die 90°-Arbeitsstellung hinaus um etwa 20° nach hinten zu schwenken. Für die 90°-Stellung war bislang eine mechanische Sperre vorgesehen. Demgegeüber wird in Weiterbildung der Erfindung vorgeschlagen, daß an einem der Zylinder zum horizontalen Schwenken der inneren Arme ein hydraulischer Sperrblock angeschlossen ist. Dies ist ein an sich bekanntes Bauelement, welches eine Bewegung des Kolbens eines doppeltwirkenden Zylinders auch dann verhindert, wenn beide Anschlußleitungen drucklos sind. Das Vorhandensein des anfänglich erwähnten, über beispielsweise ein Zugseil betätigbaren Sperrventils bewirkt, daß mit dem einen Sperrblock beide Zylinder zum horizontalen Schwenken der inneren Arme immobilisiert sind. Der Einfachheit halber genügt es, einen der beiden Zylinder mit einem längeren Hub auszustatten, denn der Schlepperfahrer kann die Fahrtrichtung entlang des Grabens frei bestimmen.

Schließlich wird noch vorgeschlagen, daß den Zylindern zum horizontalen Schwenken der inneren Arme jeweils eine Rückschlagdrossel vorgeschaltet ist, derart, daß der von dem kürzeren Zylinder angetriebene Arm beim Schwenken nach hinten vorausläuft und der andere innere Arm nachläuft und umgekehrt beim Schwenken nach vorn der vom längeren Zylinder angetriebene innere Arm vorausläuft und der andere Arm nachläuft. Dies erleichtert nicht nur die Einstellung des längeren Zylinders in die genaue 90°-Querstellung. Auch beim Einlaufen in die Transportstellung ist es wünschenswert, wenn die Arme zeitlich versetzt ankommen, damit sie sich richtig auf die Transportstützen des Mittelrahmens legen und das Zusammenschwenken der Kreisel beobachtet werden kann.

Ein Ausführungsbeispiel der Erfindung wird nachfolgend anhand der Zeichnung erläutert. Im einzelnen zeigt
- Fig. 1: die Draufsicht eines Heuwenders mit acht Kreiseln in der Arbeitsstellung,
- Fig. 2: eine Seitenansicht dieses Heuwenders in der Transportstellung,
- Fig. 3: die Draufsicht gemäß Fig. 2,
- Fig. 4: die Rückansicht des Heuwenders, wobei die linke Seite die Arbeitsstellung und die rechte Seite die nach oben und innen geschwenkten Arme und Zinkenkreisel zeigt,
- Fig. 5: die Rückansicht des Heuwenders in der Wendestellung mit angehobenem Mittelrahmen und hochgeschwenkten inneren Armen und
- Fig. 6: ein Schema der hydraulischen Steuerungsvorrichtung für den gezeigten Kreiselheuwender.

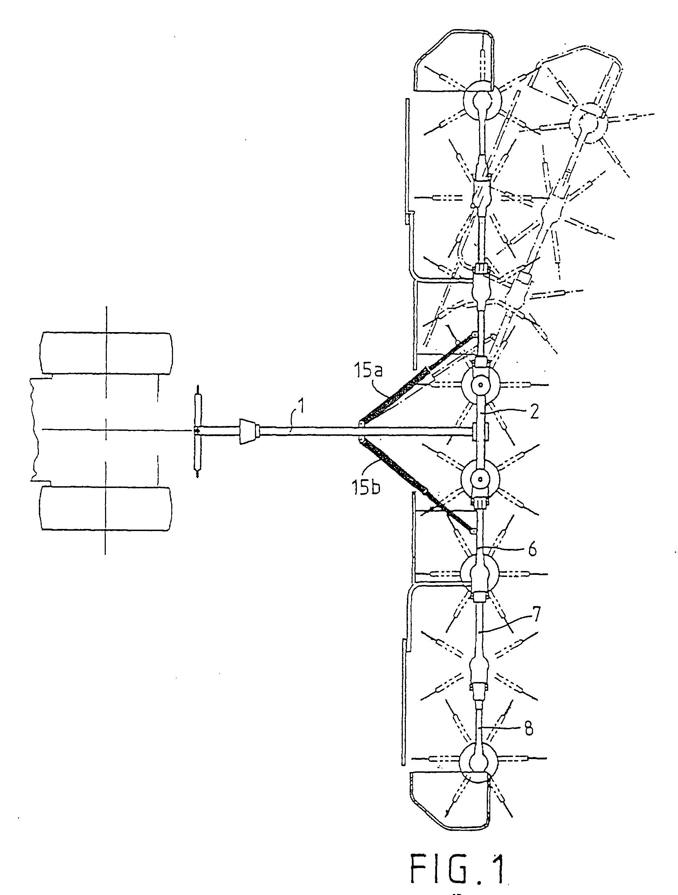

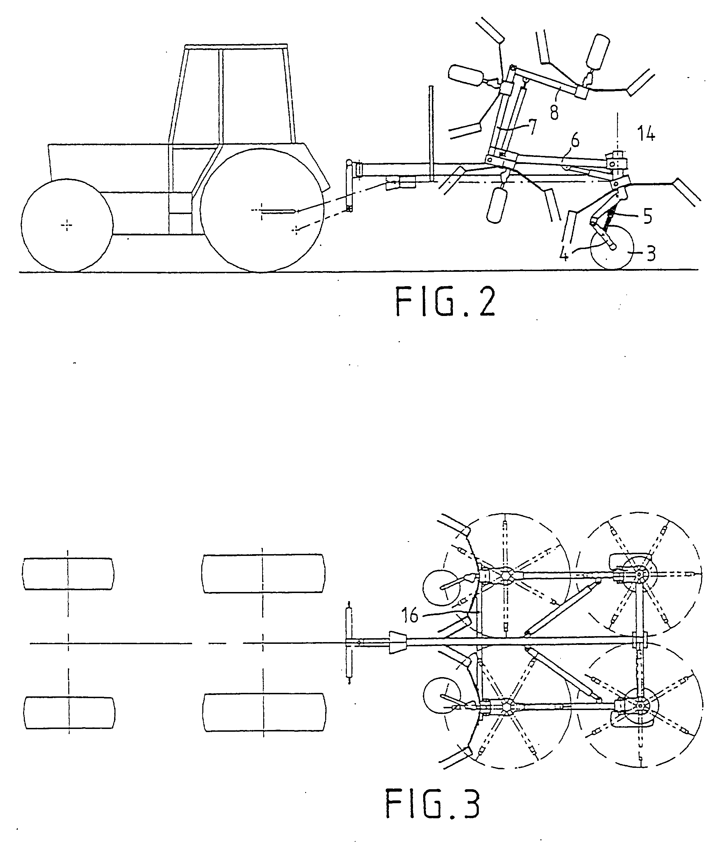

Der in den Figuren 1 bis 5 dargestellte Heuwender wird von einem Schlepper gezogen und ist mit acht Zinkenkreiseln ausgestattet. Er hat ein Mittelfahrgestell, das im wesentlichen aus einem Längsträger 1 und einem Querträger 2 besteht und sich zu jeder Zeit über zwei Transporträder 3 am Boden abstützt. Die Transporträder 3 sind höhenverstellbar, wie Fig. 2 zeigt. Jedes Rad sitzt an einer Schwinge 4 die mittels eines einfachwirkenden hydraulischen Zylinders 5 auf und ab geschwenkt werden kann. An dem Querträger 2 des Mittelrahmens sind zwei Zinkenkreisel gelagert.

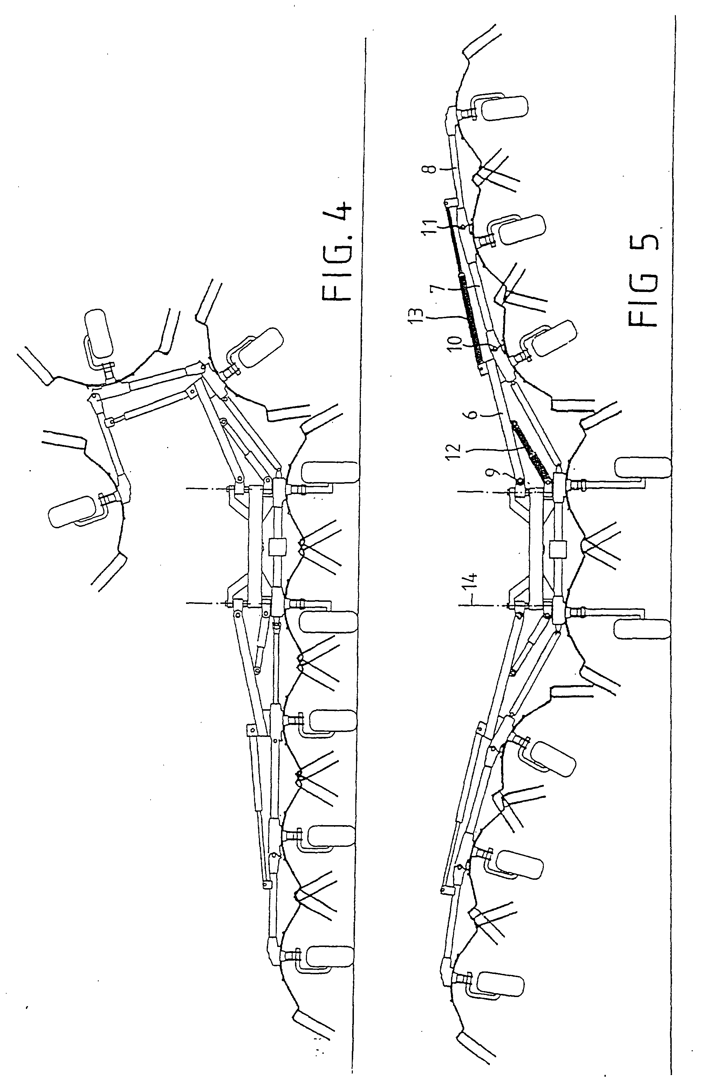

Wie an sich bekannt, schließen sich an den Querträger 2 zu beiden Seiten ein innerer Arm 6, ein mittlerer Arm 7 und ein äußerer Arm 8 an. Sie sind durch horizontalachsige Gelenke 9, 10 und 11 miteinander verbunden und können dadurch in einer vertikalen Ebene verschwenkt werden. Zum Hochschwenken der inneren Arme 6 um die Gelenke 9 (Fig. 5) dient ein weiteres Paar einfachwirkender hydraulischer Zylinder 12. Die äußeren Arme 8 sind über die mittleren Arme 7 hinweg durch doppeltwirkende hydraulische Zylinder 13 miteinander verbunden. Das ermöglicht es, die mittleren Arme 7 durch Einfahren der Kolbenstangen dieser Zylinder 13 über die Vertikale hinaus hochzustellen und die äußeren Arme 8 nach innen zu klappen, wie in Fig. 4 dargestellt.

Die inneren Arme 6 sind außerdem mittels je eines Gelenks mit vertikaler Achse 14 am Querträger 2 horizontal verschwenkbar. Davon wird in der Transportstellung Gebrauch gemacht. Wenn nämlich die Arme mit ihren angelagerten Zinkenkreiseln gemäß Fig. 4, rechte Seite, hochgeschwenkt bzw. nach innen geklappt sind, lassen sich die inneren Arme 6 in die Stellung nach den Figuren 2 und 3 horizontal nach vorn schwenken. Der Antrieb geschieht mit Hilfe von zwei doppeltwirkenden hydraulischen Zylindern 15a und 15b (Fig. 1). Dabei kommen die inneren Arme 6 mit ihren nach vornweisenden Enden auf Querstützen 16 (Fig. 3) zu liegen, die am Längsträger 1 befestigt sind.

Der rechte Zylinder 15a ist ein wenig länger als der linke 15b, um die rechten Arme über die in Fig. 1 mit ausgezogenen Strichen dargestellte 90°-Querstellung hinaus nach hinten schwenken zu können. Diese Stellung dient zum Grabenräumen und ist in Fig. 1 strichpunktiert eingezeichnet. Der zusätzliche Schwenkwinkel beträgt etwa 20°. Damit wird erreicht, daß das vom äußersten Zinkenkreisel weggeschleuderte Heu nicht über die Breite der Maschine hinaus geworfen wird.

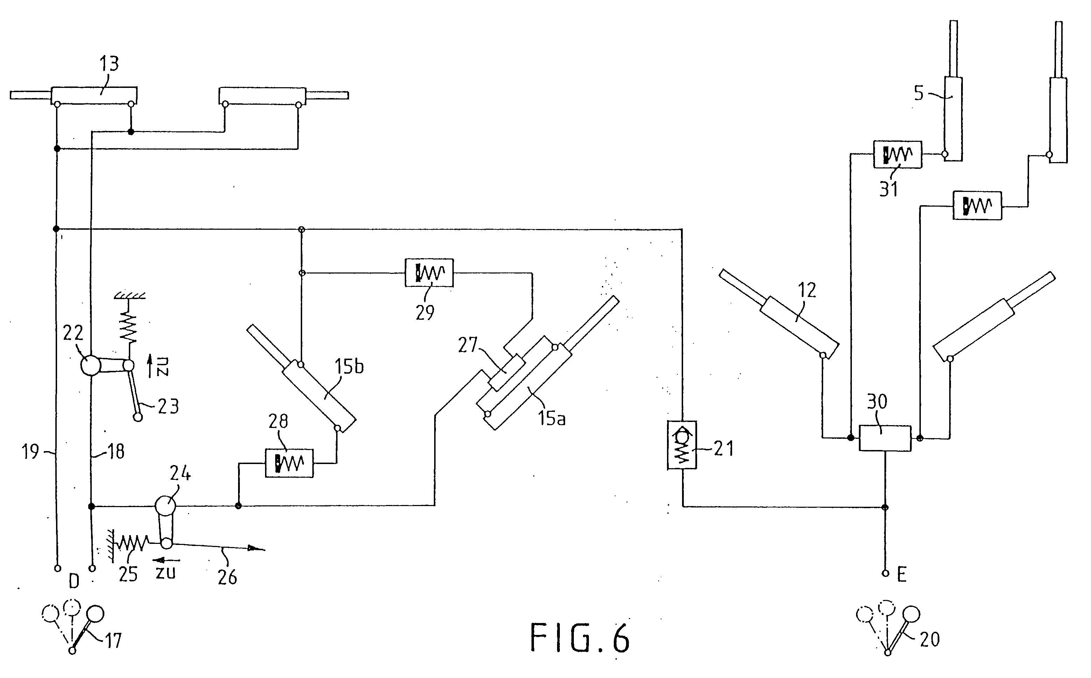

Anhand des hydraulischen Schaltschemas nach Fig. 6 wird nun beschrieben, wie sich die einzelnen Bewegungsvorgänge unter Berücksichtigung der betrieblichen Notwendigkeiten und der Unfallgefahren vom Schlepper aus einfach steuern lassen.

Die linke Hälfte des Schemas zeigt das doppeltwirkende hydraulische System mit den beiden Zylindern 13 für die äußeren Arme und den beiden unterschiedlich langen Zylindern 15a und 15b für die horizontale Schwenkbewegung der inneren Arme 6. Dieses doppeltwirkende System wird aus den doppeltwirkenden Hydraulikanschlüssen D des Schleppers gespeist, die mittels eines Stellhebels 17 gesteuert werden können. Der Hebel hat drei Stellungen. In einer Stellung ist die eine Anschlußleitung 18 unter Druck und die andere Anschlußleitung 19 drucklos auf Rücklauf. In der Mittelstellung sind beide Anschlußleitungen geschlossen (Neutralstellung) und in der dritten Stellung hat die Anschlußleitung 19 Druck und die Anschlußleitung 18 ist drucklos.

Die rechte Hälfte des Bildes zeigt das einfachwirkende hydraulische System, das mit dem einfachwirkenden Anschluß E des Schleppers verbunden ist. Der hierzu gehörende Stellhebel 20 hat ebenfalls drei Stellungen. In der ersten Stellung steht die Anschlußleitung unter Druck, in der zweiten Stellung ist sie drucklos ("Senken" = Schwimmstellung) und in der dritten Stellung ist die Anschlußleitung abgesperrt (Neutralstellung). Das einfachwirkende hydraulische System enthält die beiden Zylinder 12 zum Hochschwenken der inneren Arme 6 und die beiden Zylinder 5 zur Höhenverstellung des Fahrwerks. Beide Systeme sind über ein Rückschlagventil 21 miteinander verbunden. Es ist so eingeschaltet, daß es von der Anschlußleitung 19 des doppeltwirkenden Systems zur Anschlußleitung des einfachwirkenden Systems öffnet.

Prinzipell sind die doppeltwirkenden Zylinder 13 und 15 in Parallelschaltung angeschlossen. Jedoch ist nach dem Abzweig zu den Zylindern 15 in der Anschlußleitung 18 ein Sperrventil 22 angeordnet. Es wird in Abhängigkeit von der Stellung der inneren Arme 6 betätigt und kann beispielsweise am Längsträger 1 befestigt und über eine Koppelstange 23 gelenkig mit einem der beiden Arme 6 verbunden sein. Diese nicht näher gezeigte Anordnung wirkt jedenfalls so, daß die Anschlußleitung 18 gesperrt ist, wenn die Arme 6 in Transportstellung nach vorn geschwenkt sind. Das Sperrventil 22 öffnet erst, wenn sich diese Arme 6 deutlich aus der Transportstellung herausbewegt haben und schon nahezu die Querstellung einnehmen.

In der Leitung, die von der Anschlußleitung 18 abzweigt und zu den Zylindern 15a und 15b führt, ist ein Sperrventil 24 angeordnet. Es wird normalerweise durch eine Feder 25 in Sperrstellung gehalten und kann durch Ziehen an einem Seil 26 geöffnet werden. Somit können die Zylinder 15a und 15b nicht allein mit dem Stellhebel 17 betätigt werden. Vielmehr ist es zusätzlich erforderlich, am Seil 26 zu ziehen.

Um den längeren Zylinder 15a, der in der 90 °-Arbeitsstellung eine Zwischenstellung innerhalb seines gesamten Hubes einnimmt, in dieser Stellung zu immobilisieren, ist ihm ein hydraulischer Sperrblock 27 vorgeschaltet und schließlich ist in den Parallelzweigen, welche die Zylinder 15a und 15b enthalten, je eine Rückschlagdrossel 28 bzw. 29 angeordnet. Die Schaltung ist gegensinnig, so daß der rechte Zylinder 15a beim Einziehen der Kolbenstangen und der linke Zylinder 15b beim Ausstoßen der Kolbenstangen vorausläuft. Der Zweck dieser Maßnahme wurde in der Einleitung schon erläutert.

Die Zylinderpaare 5 und 12 erhalten das Drucköl über einen Mengenteiler 30, so daß die jeweiligen Zylinder beider Seiten gleiche Wege machen. Außerdem sind den Zylindern 5 Rückschlagdrosseln 31 vorgeschaltet, die beim Einfahren der Kolben, d. h. beim Absenken des Mittelrahmens, gleichsinnig wirksam werden.

Die beschriebene Vorrichtung wirkt wie folgt: Es wird angenommen, der Landwirt habe die Arbeit auf dem Feld gerade beendet. Die je drei Arme 6, 7 und 8 zu beiden Seiten des Heuwenders stehen in der gestreckten Arbeitsstellung nach Fig. 1. Die Tasträder aller Zinkenkreisel haben Bodenberührung, so wie in Fig. 4 auf der linken Seite dargestellt.

Wird nun mittels des Stellhebels 17 Druck auf die Anschlußleitung 19 gegeben, dann bewegen sich drei Zylinderpaare: die doppelt wirkenden Zylinder 13 ziehen die Kolbenstangen ein mit der Folge, daß gemäß Fig. 4, rechte Seite, die mittleren Arme 7 hochgestellt und die äußeren Arme 8 nach innen geklappt werden. Das Sperrventil 24 ist zu, so daß sich die Zylinder 15 nicht bewegen können. Über das Rückschlagventil 21 erhält jedoch auch die Anschlußleitung der einfachwirkenden Zylinder Druck. Die Zylinder 5 fahren aus und heben den Mittelrahmen 1, 2 an. Die einfachwirkenden Zylinder 12 fahren aus und schwenken die inneren Arme 6 hoch, wie ebenfalls in Fig. 4, rechte Seite, ersichtlich ist.

Mit Erreichen der Endstellungen dieser Bewegungsvorgänge sind die Voraussetzungen geschaffen, um die inneren Arme 6 mit den hochgeklappten Außenarmen horizontal nach vorn in die Transportstellung zu schwenken. Der Schlepperfahrer prüft diese Voraussetzungen durch Sichtkontrolle und zieht dann unter Beibehaltung der Position des Stellhebels 17 am Seil 26. Dadurch wird die Rückleitung der doppelwirkenden Zylinder 15a und 15b freigegeben, so daß deren Kolbenstangen einfahren und die erwähnte Bewegung ausgeführt wird, und zwar mit Vorlauf des längeren Zylinders 15a. Durch diesen zeitlichen Versatz kann die Endphase des Einlaufs in die Transportstellung besser überwacht werden. Infolge dieser Bewegung hat das Ventil 22 selbsttätig die Anschlußleitung 18 gesperrt. Der Stellhebel 17 wird auf "Neutralstellung" zurückgeführt.

Um die Enden der inneren Arme 6 richtig auf die Querstützen 16 aufzusatteln, wird der Stellhebel 20 des einfachwirkenden Anschlusses E kurzzeitig auf "Senken" gestellt. Dadurch sinken die Arme auf die Stützen. Infolge der Rückschlagdrosseln 31 sinkt der Mittelrahmen 1, 2 sehr viel langsamer ab, d. h. nur um einen unerheblichen Betrag.

Kommt der Landwirt mit dem in Transportstellung befindlichen Heuwender auf das Feld und will die Arbeit beginnen, so setzt er mit dem Stellhebel 17 die Anschlußleitung 18 unter Druck. Dadurch geschieht zunächst nichts, denn beide Sperrventile 22 und 24 sind geschlossen. Der Schlepperfahrer wird jetzt seine volle Aufmerksamkeit dem Ausschwenkvorgang widmen und diesen dadurch vorbereiten, daß er den Stellhebel 20 auf "Heben" legt und dadurch die inneren Arme von den Querstützen 16 abhebt. Nun zieht er am Seil 26, wodurch die beiden Zylinder 15a und 15b ausfahren und die Seitenarme horizontal ausschwenken, wobei in diesem Fall der kürzere Zylinder 15b vorausläuft. Er gelangt in seine Endstellung, wenn die von ihm angetriebenen linken Arme ihre 90 °-Stellung erreicht haben. Der Fahrer kann dann beobachten, wann auch die rechten Arme diese 90 °-Stellung erreicht haben und in diesem Augenblick das Seil 26 loslassen. Der Sperrblock 27 hält die Zylinder in der erreichten Stellung fest. Mittlerweile hat das Sperrventil 22 geöffnet, so daß jetzt selbsttätig die doppelwirkenden Zylinder 13 ausfahren und die Arme in ihre gestreckte Stellung bringen. Sodann wird der Stellhebel 17 in "Neutralstellung" gebracht. Die Arbeit kann aber erst beginnen, wenn die Zinkenkreisel auf den Boden abgesenkt sind. Dazu wird der Stellhebel 20 auf "Senken" gestellt, so daß das Fahrwerk seine tiefste Stellung erreicht und die Zylinder 12 wie die Zylinder 13 eine Schwimmstellung einnehmen, in welcher die Tasträder der einzelnen Zinkenkreisel Bodenberührung erhalten und sich auch im Betrieb dem Boden anpassen.

Zum Wenden am Ende des Feldes wird jeweils nur der Stellhebel 20 auf "Heben" gelegt, so daß sowohl das Fahrwerk angehoben als auch die inneren Arme 6 hochgeschwenkt werden, wobei das Ausmaß dieser Bewegungen im Belieben des Schlepperfahrers liegt. Er wird darauf achten, daß die Tasträder und sämtliche Kreiselzinken vom Boden abgehoben sind, wie etwa in Fig. 5 dargestellt. Nach dem Wenden wird der Stellhebel 20 wieder auf "Senken" gelegt.

Soll zum Grabenräumen die Möglichkeit genutzt werden, die Arme an der rechten Seite des Heuwenders weiter bis zur Endstellung des Zylinders 15a nach hinten zu schwenken, so wird dazu, ausgehend von der ausgezogenen Stellung nach Fig. 1, mittels des Stellhebels 17 die Anschlußleitung 18 unter Druck gesetzt und das Seil 26 gezogen. Der Zylinder 15a läuft dann in seine Endstellung. Dann kann das Seil 26 losgelassen und der Stellhebel 17 auf "Neutral" zurückgestellt werden.

Im umgekehrten Fall, um die Arme an der rechten Maschinenseite wieder in 90 °-Stellung zu bringen, wird die Anschlußleitung 19 unter Druck gesetzt und ebenfalls das Seil 26 gezogen. Bei dieser Bewegung ist der Öldurchlauf durch den Zylinder 15b gedrosselt, so daß er sich nur wenig bewegt, bis der vorauslaufende Zylinder 15a die rechten Arme in die normale Arbeitsstellung zurückgeführt hat. Auch ein mögliches beginnendes Anheben der äußeren Arme infolge einer Bewegung der doppeltwirkenden Zylinder 13 ist im Ergebnis unerheblich, da anschließend der Stellhebel 17 sofort wieder auf "Senken" gestellt wird und die äußeren Arme dann wieder zurücksinken.
- 1: Längsträger
- 2: Querträger
- 3: Transportrad
- 4: Schwinge
- 5: Zylinder
- 6: innerer Arm
- 7: mittlerer Arm
- 8: äußerer Arm
- 9: Gelenk
- 10: Gelenk
- 11: Gelenk
- 12: Zylinder
- 13: Zylinder
- 14: Vertikalachse
- 15a: Zylinder, rechts
- 15b: Zylinder, links
- 16: Querstütze
- 17: Stellhebel
- 18: Anschlußleitung
- 19: Anschlußleitung
- 20: Stellhebel
- 21: Rückschlagventil
- 22: Sperrventil
- 23: Koppelstange
- 24: Sperrventil
- 25: Feder
- 26: Zugseil
- 27: Sperrblock
- 28: Rückschlagdrossel
- 29: Rückschlagdrossel
- 30: Mengenteiler
- 31: Rückschlagdrossel
- E: einfachwirkender Hydraulikanschluß
- D: doppeltwirkender Hydraulikanschluß

## Patentansprüche

1. Heumaschine mit einer Vorrichtung zum Schwenken der Arbeitskreisel tragenden Arme und zur Höhenverstellung der Vielkreisel-Heumaschine, die von einem Schlepper angetrieben wird, wobei die Heumaschine einen Mittelrahmen (2) aufweist, der Arbeitskreisel trägt und sich über höhenverstellbare kombinierte Tast- und Transporträder (3) am Boden abstützt und an den sich beidseitig mehrere hochschwenkbar miteinander verbundene Arme (6, 7, 8) anschließen, die sich in Arbeitsstellung quer zur Fahrtrichtung erstrecken und über Tastelemente (3) am Boden abstützen, und außerdem die inneren, dem Mittelrahmen (2) nächstliegenden Arme (6) mit Hilfe von Hydraulikzylindern (15a, 15b), die mittels eines am Schlepper angeordneten Steuerventils (D, 17) betätigbar sind, von der Arbeitsstellung etwa horizontal nach vorn in eine Transportstellung schwenkbar sind, dadurch gekennzeichnet, dass ein mittels eines Betätigungselementes, beispielsweise eines Zugseils (26), vom Schlepper aus betätigbares, normal durch Federwirkung (25) geschlossenes Sperrventil (24) auf der Heumaschine in einer Hydraulikleitung angeordnet ist, die zu den Zylindern (15a, 15b) führt, die das horizontale Schwenken der inneren Arme (6) bewirken.

2. Heumaschine nach Anspruch 1, dadurch gekennzeichnet, dass ein Sperrventil (22) in einer (18) der Hydraulikleitungen angeordnet ist, die zu den das Hochschwenken oder Einklappen der äußeren Arme (7, 8) bewirkenden Zylindern (13) führen, welches Sperrventil (22) derart in Abhängigkeit von der horizontalen Schwenkbewegung der inneren Arme (6) selbsttätig steuerbar ist, dass es in der Arbeitsstellung geöffnet und in der Transportstellung geschlossen ist.

3. Heumaschine nach Anspruch 1, dadurch gekennzeichnet, dass zum Hochschwenken oder Einklappen der äußeren Arme (8) und zum horizontalen Schwenken der inneren Arme (6) doppeltwirkende Zylinder (15 bzw. 13) in Parallelschaltung mit den doppeltwirkenden steuerbaren Hydraulikanschlüssen (D) des Schleppers verbunden sind, dass zum Hochschwenken der inneren Arme (6) und zum Höhenverstellen des Mittelrahmens (1, 2) einfachwirkende Zylinder (12 bzw. 5) an dem einfachwirkenden steuerbaren Hydraulikanschluss (E) des Schleppers angeschlossen sind und dass das doppeltwirkende Hydrauliksystem der Heumaschine mit dem einfachwirkenden Hydrauliksystem über ein Rückschlagventil (21) verbunden ist, derart, dass die beim horizontalen Einschwenken in die Transportstellung unter Druck stehende Anschlussleitung (19) des doppeltwirkenden Systems (D) zu dem einfachwirkenden System (E) hin offen ist.

4. Heumaschine nach Anspruch 3, dadurch gekennzeichnet, dass im einfachwirkenden Hydrauliksystem ein Mengenteiler (30) vorgesehen ist, der den einfachwirkenden Zylindern (5, 12) auf der linken und rechten Seite der Heumaschine gleiche Ölmengen zuteilt.

5. Heumaschine nach Anspruch 3, dadurch gekennzeichnet, dass den Zylindern (5) zur Höhenverstellung des Mittelrahmens (1, 2) bezüglich der Transporträder (3) Rückschlagdrosseln (31) vorgeschaltet sind, derart, dass im drucklosen Zustand die inneren Arme (6) schneller absinken als der Mittelrahmen (1, 2).

6. Vorrichtung nach Anspruch 3, dadurch gekennzeichnet, dass an einem der Zylinder (15a, 15b) zum horizontalen Schwenken der inneren Arme (6) ein Sperrblock (27) angeschlossen ist.

7. Vorrichtung nach Anspruch 6, dadurch gekennzeichnet, dass einer (15a) der Zylinder zum horizontalen Schwenken der inneren Arme (6) einen längeren Hub als der andere Zylinder (15b) aufweist, derart, dass der betreffende Arm über seine Arbeitsstellung hinaus nach hinten in eine Schrägstellung geschwenkt werden kann.

8. Vorrichtung nach Anspruch 7, dadurch gekennzeichnet, dass den Zylindern (15a, 15b) zum horizontalen Schwenken der inneren Arme (6) jeweils eine Rückschlagdrossel (29 bzw. 28) vorgeschaltet ist, derart, dass der von dem kürzeren Zylinder (15b) angetriebene innere Arm beim Schwenken nach hinten vorausläuft und der andere innere Arm nachläuft und beim Schwenken nach vorn der vom längeren Zylinder (15a) angetriebene innere Arm vorausläuft und der andere Arm nachläuft.

## Claims

1. A haymaking machine having an apparatus for pivotal movement of the arms carrying working rotors and for height adjustment of the multi-rotor haymaking machine, which is driven by a tractor, wherein the haymaking machine has a central frame (2) which carries working rotors and which is supported on the ground by way of height-adjustable combined sensing and transport rollers (3) and which is adjoined at both sides by a plurality of upwardly pivotably interconnected arms (6, 7, 8) which in the working position extend transversely with respect to the direction of travel and which are supported on the ground by way of sensing elements (3) and in addition the inner arms (6) which are closest to the central frame (2) are pivotable from the working position substantially horizontally forwardly into a transport position by means of hydraulic cylinders (15a, 15b) which are actuable by means of a control valve (D, 17) arranged on the tractor, characterised in that a shut-off valve (24) which is actuable from the tractor by means of an actuating element, for example a pulling cable (26) and which is normally closed by spring action (25) is arranged on the haymaking machine in a hydraulic line leading to the cylinders (15a, 15b) which produce the horizontal pivotal movement of the inner arms (6).

2. A haymaking machine according to claim 1 characterised in that a shut-off valve (22) is arranged in one (18) of the hydraulic lines leading to the cylinders (13) which produce the upward pivotal movement or folding-in movement of the outer arms (7, 8), which shut-off valve (22) is automatically controllable in dependence on the horizontal pivotal movement of the inner arms (6) in such a way that it is open in the working position and closed in the transport position.

3. A haymaking machine according to claim 1 characterised in that for the upward pivotal movement or folding-in movement of the outer arms (8) and for the horizontal pivotal movement of the inner arms (6) double-acting cylinders (15 and 13 respectively) are connected in parallel relationship to the double-acting controllable hydraulic connections (D) of the tractor, that for the upward pivotal movement of the inner arms (6) and for the height adjustment of the central frame (1, 2) single-acting cylinders (12 and 5 respectively) are connected to the single-acting controllable hydraulic connection (E) of the tractor and that the double-acting hydraulic system of the haymaking machine is connected to the single-acting hydraulic system by way of a check valve (21) in such a way that the connecting line (19) of the double-acting system (D), which connecting line is under pressure in the horizontal pivotal movement into the transport position, is open towards the single-acting system (E).

4. A haymaking machine according to claim 3 characterised in that provided in the single-acting hydraulic system is a quantitative divider (30) which distributes equal amounts of oil to the single-acting cylinders (5, 12) on the left-hand and right-hand sides of the haymaking machine.

5. A haymaking machine according to claim 3 characterised in that check throttles (31) are connected upstream of the cylinders (5) for height adjustment of the central frame (1, 2) with respect to the transport wheels (3) in such a way that in the pressure-less condition the inner arms (6) move downwardly faster than the central frame (1, 2).

6. Apparatus according to claim 3 characterised in that a shut-off unit (27) is connected to one of the cylinders (15a, 15b) for the horizontal pivotal movement of the inner arms (6).

7. Apparatus according to claim 6 characterised in that one (15a) of the cylinders for the horizontal pivotal movement of the inner arms (6) has a longer stroke than the other cylinder (15b) in such a way that the arm in question can be pivoted rearwardly beyond its working position into an inclined position.

8. Apparatus according to claim 7 characterised in that connected upstream of the cylinders (15a, 15b) for the horizontal pivotal movement of the inner arms (6) is a respective check throttle (29 and 28 respectively) in such a way that the inner arm which is driven by the shorter cylinder (15b) leads in the pivotal movement rearwardly and the other arm trails and in the pivotal movement forwardly the inner arm which is driven by the longer cylinder (15a) leads and the other arm trails.

## Revendications

1. Faneuse entraînée par un tracteur, munie d'un dispositif permettant de faire pivoter les bras portant les toupies et de régler la hauteur de la faneuse à plusieurs toupies, la faneuse comportant un châssis intermédiaire (2) qui porte des toupies et prend appui sur le sol par des roues mixtes (3) de jauge et de transport, réglables en hauteur, et auquel sont reliés, de chaque côté, plusieurs bras (6, 7, 8) relevables, liés les uns aux autres, qui, dans la position de travail s'étendent transversalement à la direction de déplacement et prennent appui sur le sol par l'intermédiaire d'éléments de jauge (3), les bras (6) intérieurs, situés le plus près du châssis intermédiaire (2), pouvant être amenés de la position de travail dans une position de transport par pivotement sensiblement horizontal, vers l'avant, à l'aide de vérins hydrauliques (15a, 15b) commandés par une soupape de commande (D, 17) placée sur le tracteur, caractérisée en ce qu'une vanne d'arrêt (24) fermée par défaut par l'action d'un ressort (25), qui peut être commandée à partir du tracteur à l'aide d'un élément d'actionnement, par exemple à l'aide d'un câble de traction (26), est disposée sur la faneuse, dans une conduite hydraulique qui mène aux vérins hydrauliques (15a, 15b) assurant le pivotement horizontal des bras intérieurs.

2. Faneuse selon la revendication 1, caractérisée en ce qu'une vanne d'arrêt (22) est disposée dans une (18) des conduites hydrauliques qui mènent aux vérins (13) assurant le relevage ou le rabattement des bras extérieurs (7, 8), laquelle vanne d'arrêt (22) peut être commandée de manière automatique en fonction du mouvement de pivotement horizontal des bras intérieurs (6), de telle sorte qu'elle soit ouverte dans la position de travail et qu'elle soit fermée dans la position de transport.

3. Faneuse selon la revendication 1, caractérisée en ce que pour le relevage ou le rabattage des bras extérieurs (8) et pour le pivotement horizontal des bras intérieurs (6), des vérins à double action (15 ou 13) sont connectés en parallèle aux prises hydrauliques (D) à double action commandables du tracteur, en ce que pour relever les bras intérieurs (6) et régler en hauteur le châssis intermédiaire (1, 2), des vérins à simple action (12 ou 5) sont connectés aux prises hydrauliques (E) à simple action commandables du tracteur et en ce que le circuit hydraulique à double action de la faneuse est relié au circuit hydraulique à simple action par un clapet anti-retour (21), de manière telle que la conduite de liaison (19) du circuit à double action (D) qui se trouve sous pression lors du pivotement horizontal des bras vers la position de transport communique avec le circuit à simple action (E).

4. Faneuse selon la revendication 3, caractérisée en ce qu'un répartiteur de débit (30) est disposé dans le circuit hydraulique à simple action et alimente avec un débit d'huile identique les vérins à simple effet (5, 12) situés sur la gauche et sur la droite de la faneuse.

5. Faneuse selon la revendication 3, caractérisée en ce que des clapets d'étranglement (31) sont disposés en amont des vérins de réglage en hauteur du châssis intermédiaire (1, 2) par rapport aux roues de transport (3), de sorte qu'en l'absence de pression, les bras intérieurs (6) s'abaissent plus rapidement que le châssis intermédiaire (1, 2).

6. Faneuse selon la revendication 3, caractérisée en ce qu'un bloc de coupure (27) est connecté à l'un des vérins (15a, 15b) de pivotement horizontal des bras intérieurs (6).

7. Faneuse selon la revendication 6, caractérisée en ce que l'un (15a) des vérins pour le pivotement horizontal des bras intérieurs (6) présente une course plus longue que l'autre vérin (15b), de sorte que le bras concerné peut pivoter vers l'arrière au delà de sa position travail, jusque dans une position inclinée.

8. Faneuse selon la revendication 7, caractérisée en ce qu'un clapet d'étranglement (29, 28) est disposé en amont de chacun des vérins (15a) pour le pivotement horizontal des bras intérieurs (6), de telle sorte que le bras intérieur entraîné par le vérin plus court (15b) soit actionné en premier lors du pivotement vers l'arrière et que l'autre bras intérieur suive, et que lors du pivotement vers l'avant, le bras intérieur entraîné par le vérin plus long (15a) soit actionné en premier et que l'autre bras suive.
